# EUROPEAN PATENT APPLICATION

(11) **EP 2 413 587 A2**
(43) Date of publication of application: **01.02.2012**
(21) Application number: 11006022.5
(22) Date of filing: 22.07.2011
(51) Int. Cl.: H04N 5/232

(54) **Control apparatus for auto-tracking camera system and auto-tracking camera system equipped with same**

(30) Priority: 26.07.2010 JP 2010167031
(71) Applicant: Canon Kabushiki Kaisha, Tokyo (JP)
(72) Inventor: Watanabe, Harukazu, Tokyo (JP)
(74) Representative: Weser, Wolfgang

(57) **Abstract**

A control apparatus for a camera-monitor system having an auto-tracking function has a mode switcher switching the camera between a normal shooting mode and a tracking mode, a display position selector selecting a display position at which the selected specific object is to be displayed on the monitor screen, and a signal outputting unit outputting a drive signal for driving the auto-tracking camera so that an image of the tracked specific object is displayed at the display position. When the tracking mode is selected by the mode switcher, the signal outputting unit outputs to the camera a drive signal responsive to the amount of operation of the operation part so that the direction of shift of the selected specific object in shifting the selected specific object on the monitor screen coincides with the represented direction during setting performed before the camera starts auto tracking of the selected specific object.

## Description

### BACKGROUND OF THE INVENTION

### Field of the Invention

The present invention relates to a control apparatus for an auto-tracking camera that can suitably be used in a TV camera or a surveillance camera to track a subject (specific object) to be tracked (to take its image) using a motorized pan and tilt head and to display the image in a monitor for observation. The present invention also relates to an auto-tracking camera system equipped with such a control system.

### Description of the Related Art

There are known cameras with motorized pan and tilt head that can rotate or swing to pan or tilt the camera. An operation device is coupled to such a camera with motorized pan and tilt head by cable or wireless connection to allow remote control of the driving of the motorized pan and tilt head as well as the shooting operation of the camera. An operator observes the image displayed on a monitor and operates the operation device to control the camera and the electric pan head.

In recent years, auto-tracking camera systems using image recognition technology in a camera with motorized pan and tile head to track a subject imaged by the camera for observation (see Japanese Patent Application Laid-Open Nos. 2002-191046 and H08-98062).

In the auto-tracking camera system disclosed in Japanese Patent Application Laid-Open No. 2002-191046, a subject to be tracked is selected in an image on the monitor before starting auto-tracking of the subject, and the output position or the position on the monitor screen at which the selected subject is to be displayed is selected. Japanese Patent Application Laid-Open No. 2002-191046 discloses, as means for selecting or setting the output position of the selected subject on the monitor screen, a console (operation device) that allows the selection of the output position of the subject by entry of a designated output position on the monitor screen.

Japanese Patent Application Laid-Open No. H08-98062 discloses panning and tilting a motorized pan and tilt head by operating an operation device to move a subject to a desired position in the monitor image. However, Japanese Patent Application Laid-Open No. H08-98062 does not disclose an auto-tracking camera system, and it teaches nothing about means for selecting the output position of a subject on the monitor screen accordingly.

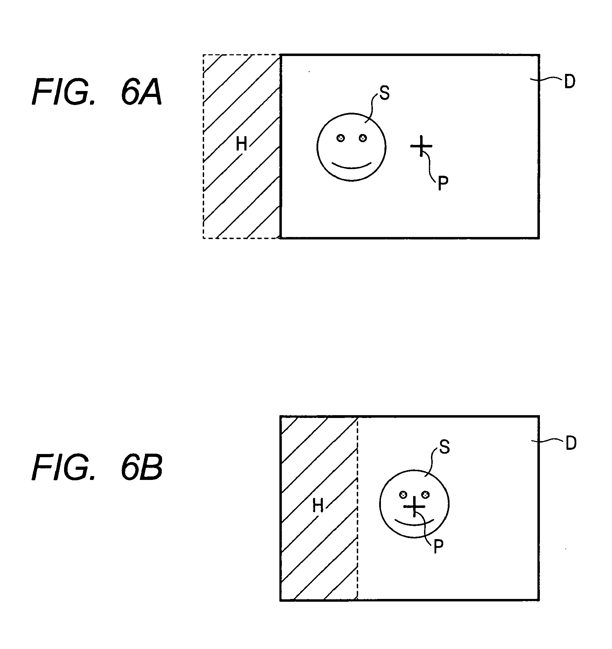

In the technology disclosed in Japanese Patent Application Laid-Open No. 2002-191046, as shown in FIG. 6A, a designated position P is designated or entered as the output position in the displayed image D (or the monitor screen) by output position selector for selecting a subject to be tracked, before the start of tracking of the subject. After the start of tracking of the subject S, the motorized pan and tilt head is controlled in such a way that the subject S is output at the designated position P, as shown in FIG. 6B. At this time, since the hatched area H in FIG. 6B was outside the image (i.e. does not fall within the picked up area) before the start of tracking shown in FIG. 6A, there is a problem that the background of the subject S cannot be observed before the start of tracking.

To solve this problem encountered with the technology disclosed in Japanese Patent Application Laid-Open No. 2002-191046, an operation part of the operation device may be operated to bring the subject S to the designated position P by rotation of the electric pan head as disclosed in Japanese Patent Application Laid-Open No. H08-98062. This will enable observation of the background of the subject before the start of tracking. However, if the direction of operation of the operation part and the direction of rotation of the motorized pan and tilt head are the same as is the case in Japanese Patent Application Laid-Open No. H08-98062, the operation part must be operated in the direction opposite to the direction in which the subject is desired to shift on the screen. This is not intuitive operation for the operator, possibly leading to operation mistakes. Moreover, in the system disclosed in Japanese Patent Application Laid-Open No. H08-98062, the direction of rotation of the motorized pan and tilt head can be changed. In this case, the operator needs to check whether the direction of rotation of the motorized pan and tilt head is the same as or opposite to the direction of operation of the operation part when selecting the output position of the subject. This complicates the operation.

### SUMMARY OF THE INVENTION

A control apparatus for auto-tracking camera according to the present invention has an auto-tracking function of tracking a specific object selected from objects picked up by the camera and displayed on a monitor screen and a display function of displaying the selected specific object at a predetermined position on the monitor screen. The control apparatus includes: a mode switcher that switches the auto-tracking camera between a normal shooting mode and a tracking mode; a display position selector that selects, with an operation of an operation part, a display position at which the selected specific object is to be displayed on the monitor screen; and a signal outputting unit that outputs a drive signal for driving the auto-tracking camera so that an image of the tracked specific object is displayed at the display position selected by the display position selector, wherein when the tracking mode is selected by the mode switcher and the auto-tracking camera is in a setting prior to a setting that the auto-tracking camera automatically tracks the selected specific object, the signal outputting unit outputs to the auto-tracking camera a drive signal responsive to the amount of operation of the operation part so that the direction of shift of the selected specific object in shifting the selected specific object on the monitor screen by operating the operation part coincides with the direction of operation of the operation part.

Further features of the present invention will become apparent from the following description of exemplary embodiments with reference to the attached drawings.

### BRIEF DESCRIPTION OF THE DRAWINGS

FIG. 1 is a diagram showing relevant portion of an apparatus according to a first embodiment of the present invention.

FIG. 2 illustrates an image on a monitor screen in which a tracked subject frame and an output position selection mark are displayed according to the present invention.

FIG. 3 includes a flow chart of a process of selecting the output position and diagrams illustrating the monitor screen according to the first embodiment of the present invention.

FIG. 4 is a flow chart of a process of selecting the output position according to the first embodiment of the present invention in which steps S7, S8 and S11 have been eliminated.

FIG. 5 is a flow chart of a process according to a second embodiment.

FIGS. 6A and 6B illustrate a problem with an apparatus disclosed in Japanese Patent Application Laid-Open No. 2002-191046.

### DESCRIPTION OF THE EMBODIMENTS

Preferred embodiments of the present invention will now be described in detail in accordance with the accompanying drawings.

An object of the present invention is to provide a control apparatus for an auto-tracking camera that enables, by simple operation by an operator, easy setting and display of a subject at a desired position on the monitor screen when a part of the subject is to be tracked and to provide an auto-tracking camera system equipped with such a control apparatus.

In the control apparatus for auto-tracking camera according to the present invention, a subject S to be tracked is selected from among objects in the image picked up by the auto-tracking camera 1, 2 having a camera 1 and a motorized pan and tile head 2 and displayed on a monitor screen 14. The control apparatus has the auto-tracking function of outputting or displaying the selected subject S at a predetermined position on the monitor screen 14.

The control apparatus for auto-tracking camera according to the present invention has a mode switcher 8 that switches the mode of the camera 1 between normal shooting mode and tracking mode when the apparatus is used as the control apparatus for an auto-tracking camera 1, 2 and a display (or output) position selector (or operation part) 9 used to select a display position (or output position) at which the tracked subject S is to be displayed on the monitor screen 14. The display position selector may refer to only the operation part or to the operation part and a CPU 5 (which may includes a control processing section 13 and a section 12 that generates a tracking subject frame and an output position selection mark etc.) that sets the display position at which the tracked subject is to be displayed in response to an operation made through the operation part.

It is preferred that the control apparatus further has at least one of the following units provided in the CPU 5: a direction detector that detects the relationship between the direction of rotation or swing (in at least one of panning and tilting directions) of the auto-tracking camera and the operating direction of the output position selector 9 (specifically, the operation part thereof), an image inversion detector that detects whether or not the image represented by an image signal supplied from the auto-tracking camera is inverted, and a rotation switcher that switches the direction of rotation of the auto-tracking camera. It is more preferred that the control apparatus further has a signal outputting unit (which may be included in the CPU 5 or the control processing section 13) that outputs a drive signal for driving the auto-tracking camera 1, 2 in such a way that the image of the tracked subject S is output (or displayed) at the output position (display position) selected by the output position selector 9.

When camera is in tracking mode, the process described below is performed in the control apparatus having the above-described configuration before the auto-tracking camera (1, 2) starts auto-tracking of the subject S to be tracked. (This process is also performed when new auto-tracking with changed setting is to be performed while auto-tracking is performed.) Specifically, when the auto-tracking mode is selected by the mode switcher, in the setting process (or during the time) before the start of auto-tracking of the subject to be tracked by the auto-tracking camera, the signal outputting unit outputs a drive signal responsive to the amount of operation of the operation part to the auto-tracking camera (including the camera 1 and the pan head 2) so that the selected subject shifts in the direction same as the operation direction of the operation part when the selected subject is shifted by the operation of the operation part to a position on the monitor screen at which it is to be displayed. In other words, as the output position selector is operated in a first direction (e.g. rightward), the frame used to select the subject to be tracked (e.g. a tracked subject frame Ft that will be described later) also shifts in the direction (rightward) same as the first operation direction (or does not move in the opposite direction). More specifically, as the above-described operation is performed, the frame used to select the subject to be tracked will shift in a certain direction such as an upper right direction, lower right direction or straightly rightward, but it will not shift leftward. Thus, it will shift upward, downward, or rightward.

Therefore, in the control apparatus for auto-tracking camera according to the present invention, when the tracking mode is selected (or during setting before starting auto-tracking in the tracking mode), the direction of operation of the operation part and the direction of rotation of the motorized pan and tilt head are opposite to each other. On the other hand, when the normal shooting mode is selected, the direction of operation of the operation part and the direction of rotation of the motorized pan and tile head are the same. The switching of the direction between the tracking mode and the normal shooting mode is one of major features of the present invention. If for example the rightward direction and the leftward direction are referred to as the plus direction and the minus direction respectively, one of the features of the present invention resides in the determination of whether the sign of the value of a position command or a velocity command contained in a drive signal is to be changed (into the opposite sign). This determination may be made based on results of detection made by various detectors.

In the following, the present invention will be illustrated specifically.

(First Embodiment)

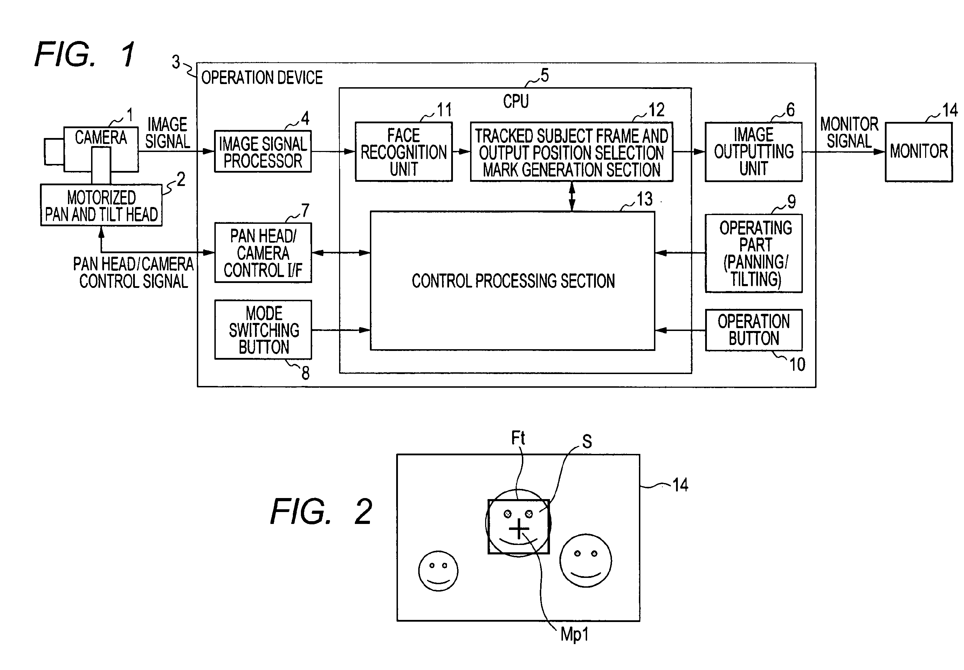

FIG. 1 is a diagram showing relevant portions of a control apparatus for auto-tracking camera and an auto-tracking camera system equipped with the same according to a first embodiment of the present invention. In FIG. 1, a camera 1 with a taking lens having zooming and focusing functions is mounted on a motorized pan and tile head 2 that can rotate or swing to achieve panning (i.e. horizontal movement) and tilting (i.e. vertical movement). An operation device 3 is provided remotely from the camera 1 and the motorized pan and tile head 2 to allow various control of the camera 1 such as zooming and image gain adjustment and various controls of the motorized pan and tile head 2 such as panning and tilting.

The image signal output from a CCD provided in the camera 1 is supplied, responsive to the operation made by the operator, to an image signal processor 4 in the operation device 3, which controls the camera 1 and the motorized pan and tile head 2 on which the camera 1 is mounted. The operating device 3 also has the CPU 5, an image outputting unit 6, a pan head/camera control interface 7, a mode switching button (mode switcher) 8, the operation part 9 and an operation button 10 etc. in addition to the image signal processor 4. The CPU 5 has a face recognition section (or image recognition section) 11, a section 12 that generates a tracked subject frame and an output position selection mark, and a control processing section 13 etc.

Signals output from the image signal processor 4 are input to the control processing section 13 via the face recognition section 11 and the section 12 that generates the tracked subject frame and the output position selection mark. Signals output from the section 12 that generates the tracked subject frame and the output position selection mark is input to the monitor (monitor screen) 14 provided separately from the operation device via the image outputting unit 6.

Although in this embodiment the operation device 3 is connected to the external monitor 14, the operation device 3 may be equipped with an internal monitor such as a liquid crystal monitor, to which signals may be output. The control processing section 13 is connected to the motorized pan and tile head 2 through the pan head/camera control interface 7. The control processing section 13 is also coupled with the mode switching button 8, the operation part 9 and the operation button 10.

The image signal processor 4 performs analogue-to-digital signal conversion if an image signal input from the camera 1 is an analogue signal, and image inversion processing if the camera 1 mounted on the motorized pan and tile head is oriented inversely to produce an inverted image. The image signal output from the image signal processing unit 4 is input to the face recognition section 11 in the CPU 5.

In this embodiment, a human subject is tracked using a pattern based on face recognition. In other words, the subject to be tracked is determined based on face recognition. However, other recognition techniques such as color recognition, contour recognition or moving object recognition may also be employed. The face recognition section 11 performs face recognition using a face recognition technique such as template matching.

Then, the position coordinates of the face (which is the subject S to be tracked) recognized by the face recognition section 11 on the image screen is input to the section 12 that generates the tracked subject frame and the output position selection mark. The tracked subject frame Ft serving as a mark of the tracked subject is generated in the monitor screen 14 in the manner illustrated in FIG. 2, based on the position coordinates of the face S recognized by the face recognition section 11.

In the case of this embodiment, the tracked subject frame Ft is generated for the face S that is detected first. However, the tracked subject frame(s) Ft may be generated for the face located closest to the center of the image screen or for all the faces recognized.

When the position on the image screen 14 (or monitor screen) at which the tracked subject S is to be output is selected, an output position selection mark Mp1 is generated at the center of the tracked subject frame Ft at that time as illustrated in FIG. 2.

The composite signal generated by superimposing the tracked subject frame Ft and the output position selection mark Mp1 to the input image through the section 12 that generates the tracked subject frame and the output position selection mark is input to the image outputting unit 6. The image outputting unit 6 outputs a monitor signal, which has been converted into an image signal of a supported image input format such as SDI, DVI, VGA or NTSC, to the display unit or the monitor 14.

The operation part 9 is manually operated by the operator for panning or tilting etc. of the motorized pan and tile head 2. The operation part 9 may be, for example, a joystick, an arrow key marked with up, down, right and left arrows, a pointing device such as a mouse, or a touch panel.

In this embodiment, a joystick is used as the operation part 9, and the apparatus is arranged in such a way that the direction of rotation of the motorized pan and tile head 2 is the same as the direction of operation (or manipulation) of the joystick. A switch for changing the direction of rotation of the motorized pan and tile head 2 in relation to the direction of operation of the operation part 9 may be provided.

The pan head/camera control interface 7 is provided to allow intercommunication between the operation device 3 and the camera 1 and the motorized pan and tile head 2 in a predetermined format. The mode switching button 8 includes a switcher button that allows the operator to make a selection between the normal mode in which the operation device 3 is used as an operation device for normal shooting and the tracking mode in which the operation device 3 is used as an operation device for tracking.

Although the mode switching button 8 is separately provided in this embodiment as illustrated in FIG. 1, an existing button may be used for this purpose. If this is the case, the mode switching may be achieved by holding this existing button down.

The CPU 5 switches the functions of the operation part 9 and the operation button 10 in accordance with the mode selected by the mode switching button 8. Specifically, in the normal shooting mode, the function of the joystick of the operation part 9 is switched to the function of rotating or panning and tilting the motorized pan and tile head 2. In the tracking mode, on the other hand, the function of the joystick is switched to the later-described subject selection function of selecting the subject S to be tracked and the output position selection function (output position selector) of selecting the output position of the tracked subject S on the screen 14. In the normal shooting mode, the function of the operation button 10 is switched to the function of turning on/off auto focusing. In the tracking mode, the operation button 10 is used in combination with the operation part 9 to have the function of selecting the subject and the function of selecting the output position.

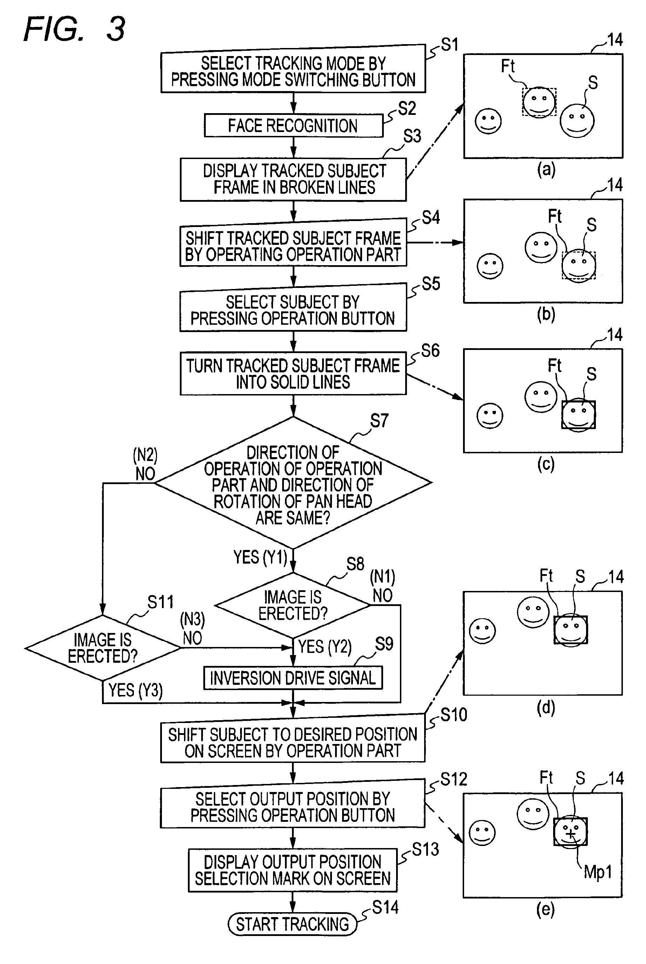

FIG. 3 is a flow chart of the control process performed before starting tracking to select the subject S to be tracked and output the selected subject S at a desired selected position on the screen 14. FIG. 3 also illustrates the subject S on the monitor screen 14 at several process steps. Specifically, process steps S1 to S14 and exemplary displayed images (a) to (e) on the monitor 14 at relevant process steps are presented in FIG. 3.

When conducting tracking, the operator first presses the mode switching button 8 of the operation device 3 shown in FIG. 1 to enable the tracking mode (step S1). The image signal input from the image signal processor 4 is subjected to face recognition in the face recognition section 11 in the CPU 5 (step S2).

A tracked subject frame Ft is displayed on the screen in broken lines as illustrated in diagram (a) in FIG. 3, in the vicinity of the face of the subject that is recognized as a face first (step S3). If the object highlighted by the tracked subject frame Ft is not the subject S to be tracked, the tracked subject frame Ft will be shifted to the subject S to be tracked by operating the operation part 9 as illustrated in diagram (b) in FIG. 3 (step S4). During setting stage before starting auto-tracking of the subject by the auto-tracking camera, the direction of shift of the tracked subject frame Ft (or the subject S to be tracked) on the screen 14 is adapted to coincide with the direction of operation of the operation part (or the output position selector) 9.

If the object S highlighted by the tracked subject frame Ft is the intended subject to be tracked, this selection is accepted by pressing of the operation button 10 (step S5). This turns the tracked subject frame Ft displayed in broken lines into that in solid lines (step S6). The steps up to step S6 are the subject selection steps in which the subject to be tracked is selected.

Next, the process of displaying the subject S at a desired output position on the screen 14 performed by the output position selector (output position selection steps) will be described. After the completion of step S6, the CPU 5 determines (or detects) the direction of operation of the operation part 9 and the direction of rotation of the motorized pan and tile head (auto-tracking camera) 2 by means of the direction detector (step S7).

Then, the image inversion detector in the CPU 5 determines whether image inversion processing has been performed in the image signal processor 4 (steps S8, S11). These steps S8 and S11 are provided to determine whether or not the camera with the motorized pan and tile head 2 is in an inverted orientation. Based on the determination in steps S7, S8 and S11, the rotation switcher in the CPU 5 selects the process of inverting the drive signal for the motorized pan and tile head 2 (step S9) or the process of outputting the drive signal without change. Specifically, if the direction of operation of the joystick of the operation part 9 and the direction of rotation of the motorized pan and tile head 2 are the same (Y1) and the image inversion processing is not performed (Y2), the rotation switcher inverts the drive signal (drive direction signal) (step S9). Note that it is defined in the present invention as a signal inversion to invert the sign of the signal.

If the direction of operation of the joystick of the operation part 9 and the direction of rotation of the motorized pan and tile head 2 are the same (Y1) and the image reversing processing is performed (N1), the process skips step S9 and proceeds to step S10. If the direction of operation of the joystick of the operation part 9 and the direction of rotation of the motorized pan and tile head 2 are opposite (N2) and the image inversion processing is performed (N3), the process of inverting the drive signal (drive direction signal) is performed (step S9). If the direction of operation of the joystick of the operation part 9 and the direction of rotation of the motorized pan and tile head 2 are opposite (N2) and the image reversing processing is not performed (Y3), the process skips step S9 and proceeds to step S10.

Then, the operator manipulates the operation part 9 to shift the subject S to be tracked to the position on the screen 14 at which it is to be output (step S10). With these steps S7 to S11, the direction of shift of the subject S on the screen 14 coincides with the direction of operation (manipulation) of the operation part (output position selector) 9.

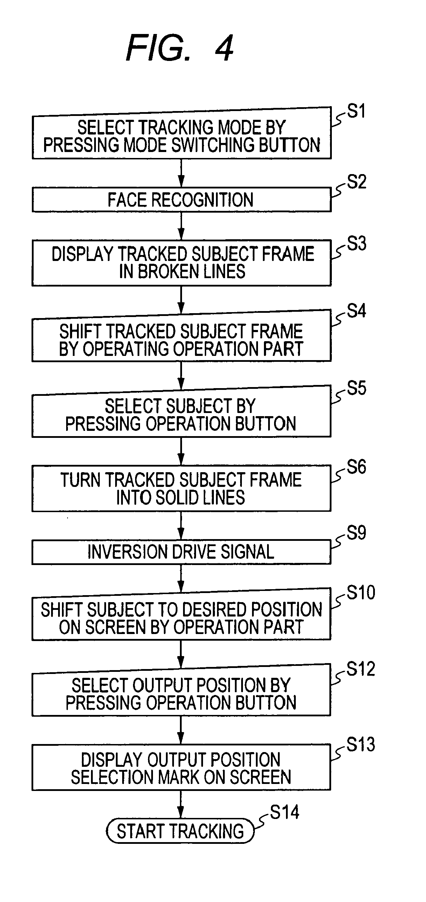

In this embodiment, the step (S7) of determining the direction of rotation of the motorized pan and tile head 2 and the step (S8, S11) of detecting the image signal reverse process are provided. If it is already known that the direction of operation of the operation part 9 and the direction of rotation of the motorized pan and tile head 2 are the same and image inversion has not been performed by the image signal processor 4, steps S7, S8 and S11 may be eliminated. In this case, the process shown in FIG. 4 may be performed.

Although the drive signal (drive direction signal) is inverted in the CPU 5 in the operation device 3 in this embodiment, the drive signal from the operation part 9 may be inverted in a CPU provided in the motorized pan and tile head 2.

Specifically, a control signal for inverting the drive signal may be sent from the operation device 3 to the motorized pan and tile head 2, and the reversal or inversion of the direction of rotation may be performed in the motorized pan and tile head 2. Moreover, although image reverse processing is performed in the image signal processor 4 in the operation device 3, image reverse processing may be performed in the camera 1, and a control signal indicative of the execution of the image reverse processing may be sent to the operation device 3.

Finally, with pressing of the operation button 10 (step S12), the output position selection mark Mp1 is superimposed on the picked up image 14 at the center of the tracked subject frame Ft as shown in diagram (e) in FIG. 3 (step S13). The steps up to step S13 are the output position selection steps performed by the output position selector in the CPU 5.

After the completion of the above-described output position selection steps, the signal outputting unit in the CPU 5 outputs a drive signal so that the tracked subject S is output at the output position on the screen 14 selected through the output position selection steps. Specifically, the signal outputting unit sends a drive signal or a pan head/camera control signal for controlling driving of the auto-tracking camera including the camera 1 and the motorized pan and tile head 2 to the camera 1 and the motorized pan and tile head 2. Consequently, auto-tracking is started by controlling at least one of zooming (or changing the focal length) of the camera 1, panning and tilting of the motorized pan and tile head 2 (step S14).

In this embodiment, when the normal shooting mode is selected by the mode switcher, the output position selector controls the panning and tilting of the auto-tracking camera.

In this embodiment as described above, when the tracking mode is selected, the following process is performed during the time before the start of auto-tracking of the tracked subject S by the auto-tracking camera 1, 2:

outputting a drive signal for driving the auto-tracking camera 1, 2 to the auto-tracking camera 1, 2 based on the result of detection by the direction detector in the CPU 5;

outputting a drive signal for driving the auto-tracking camera 1, 2 to the auto-tracking camera 1, 2 based on the result of detection by the direction detector and the image inversion detector in the CPU 5; and

switching the direction of rotation of the auto-tracking camera 1, 2 by the rotation switcher based on the result of detection by the direction detector in the CPU 5 and outputting a drive signal for driving the auto-tracking camera 1, 2 to the auto-tracking camera 1, 2.

(Second Embodiment)

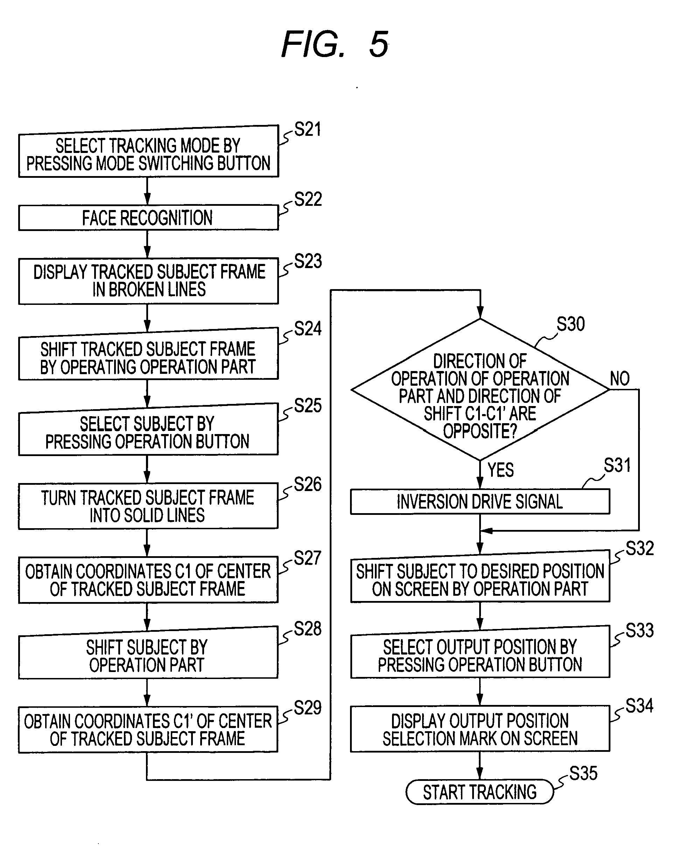

FIG. 5 is the flow chart of the process performed before the start of tracking in a control apparatus for auto-tracking camera according to a second embodiment of the present invention. In the second embodiment, the method of determining the direction of operation of the operation part 9 and the direction of rotation of the motorized pan and tile head 2 is different from that in the first embodiment. The steps S21 to S26 of selecting the subject to be tracked are the same as steps S1 to S6 in FIG. 3, and they will not be further described.

In this embodiment, after completion of step S26, the CPU 5 obtains the coordinates of the center C1 of the tracked subject frame Ft (step S27).

Then, the operator operates or manipulates the operation part 9 to shift the subject S (step S28), and the coordinates C1' of the center of the tracked subject frame Ft after the lapse of a predetermined time t are obtained (step S29). The direction detector in the CPU 5 determines whether or not the direction of shift of the coordinates of C1-C1' of the center is the same as the direction of operation of the operation part (step S30). If the directions are opposite, the drive signal is reversed in the CPU 5 in the same manner as step S8 in FIG. 3 (step S31), and the operator continues the operation of the operation part 9 to shift the tracked object S to the position on the screen at which it is to be output (step S32) . If it is determined in step S30 that the direction are the same, the process skips step S31 and proceeds to step S32. The subsequent steps S33 to S35 performed until the start of tracking are the same as steps S12 to S14 in FIG. 3, and they will not be described further.

With the above described determination method, it is possible to achieve intuitive coincidence of the intended direction of shift of the subject on the screen 14 with the direction of operation of the operation part 9 even when the subject is selected with a camera 1 for which the direction of rotation of the motorized pan and tile head 2 or inversion of the image signal are unknown. In consequence, operation mistakes can be eliminated.

Although the control apparatus for auto-tracking camera has been described in the first and second embodiments, the present invention can also be applied to auto-tracking camera systems and the like. For example, the present invention can be applied to an auto-tracking camera system fully including the camera 1, the motorized pan and tile head 2 and the operation device 3 shown in FIG. 1. The system can have a display unit like the monitor 14 by which the image picked up by the camera 1 can be observed.

Auto-tracking camera systems generally have a camera 1, a motorized pan and tilt head 2 on which the camera is mounted and an operation device 3. The operation device 3 has output position selector used to select the position on the screen 14 at which the tracked subject is to be output.

The motorized pan and tile head 2 is operated using the output position selector to select the position on the screen at which the tracked subject S is to be output. In this process, the coincidence of the intended direction of shift of the subject S on the screen with the direction of operation of the output position selector is achieved. In the embodiments, the output position selector is provided in the operation device 3. However, the output position selector may be provided in the camera body, the taking lens mounted on the camera 1 or a remote controller. Alternatively, the output position selector may be provided on a display having a touch panel to allow shifting the tracked object on the display by touching it.

As described in the foregoing, in the control apparatus for auto-tracking camera and the auto-tracking camera system according to the present invention, the output position of the subject on the screen can be selected by a simple operation by the operator.

According to the above-described embodiments, there can be provided a control apparatus for auto-tracking camera in which an automatically tracked subject, which is a part of a picked-up image can easily be displayed at a desired position on a monitor screen by a simple operation by the operator.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A control apparatus for controlling an auto-tracking camera having a motorized pan and tilt head that can rotate and on which a camera is mounted, wherein the control apparatus has an auto-tracking function of tracking a specific object selected from objects picked up by the camera and displayed on a monitor screen and a display function of displaying the selected specific object at a predetermined position on the monitor screen and includes:
a mode switcher that switches the auto-tracking camera between a normal shooting mode and a tracking mode;
a display position selector that selects, with an operation of an operation part, a display position at which the selected specific object is to be displayed on the monitor screen; and
a signal outputting unit that outputs a drive signal for driving the auto-tracking camera so that an image of the tracked specific object is displayed at the display position selected by the display position selector,
wherein when the tracking mode is selected by the mode switcher and the auto-tracking camera is in a setting prior to a setting that the auto-tracking camera automatically tracks the selected specific object, the signal outputting unit outputs to the auto-tracking camera a drive signal responsive to the amount of operation of the operation part so that the direction of shift of the selected specific object in shifting the selected specific object on the monitor screen by operating the operation part coincides with the direction of operation of the operation part.

2. A control apparatus according to claim 1, further comprising a direction detector that detects a relationship between the direction of rotation of the auto-tracking camera and the direction of operation of the operation part, wherein the signal outputting unit outputs a drive signal responsive to a result of detection by the direction detector.

3. A control apparatus according to claim 1, further comprising an image inversion detector that detects whether or not an image represented by an image signal from the auto-tracking camera is inverted, wherein the signal outputting unit outputs a drive signal responsive to a result of detection by the image inversion detector.

4. A control apparatus according to claim 1, further comprising a rotation switcher that switches the direction of rotation of the auto-tracking camera, wherein when the tracking mode is selected by the mode switcher and the auto-tracking camera is in a setting prior to a setting that the auto-tracking camera automatically tracks the selected specific object, the rotation switcher switches the direction of rotation of the auto-tracking camera so that the direction of shift of the selected specific object in shifting the selected specific object on the monitor screen by operating the operation part coincides with the direction of operation of the operation part.

5. A control apparatus according to claim 1, wherein when the normal shooting mode is selected by the mode switcher, the output position selector controls panning and tilting of the auto-tracking camera.

6. A control apparatus according to claim 1, wherein the direction of rotation of the auto-tracking camera relative to the direction of operation of the operation part during the time while the tracking mode is selected by the mode switcher and that during the time while the normal shooting mode is selected by the mode switcher are opposite to each other.

7. A control apparatus according to claim 6, wherein the magnitude of the drive signal during the time while the tracking mode is selected by the mode switcher and that during the time while the normal shooting mode is selected by the mode switcher are the same.

8. An auto-tracking camera system comprising:
an auto-tracking camera having a motorized pan and tilt head that can rotate and on which a camera is mounted; and
the control apparatus according to any one of claims 1 to 7 for controlling the auto-tracking camera.
